(19) Europäisches Patentamt
European Patent Office
Office européen des brevets

(11) **EP 2 279 540 B1**

(12) **EUROPÄISCHE PATENTSCHRIFT**

(45) Veröffentlichungstag und Bekanntmachung des Hinweises auf die Patenterteilung:
**07.09.2011 Patentblatt 2011/36**

(51) Int Cl.:
*H01M 12/06* (2006.01)   *H02M 3/00* (2006.01)
*H02J 7/34* (2006.01)

(21) Anmeldenummer: **09734168.9**

(22) Anmeldetag: **25.03.2009**

(86) Internationale Anmeldenummer:
**PCT/EP2009/053510**

(87) Internationale Veröffentlichungsnummer:
**WO 2009/130101 (29.10.2009 Gazette 2009/44)**

(54) **VERFAHREN ZUR STROMENTNAHME AUS ELEKTROCHEMISCHEN ZELLEN MITTELS FREQUENZIMPULSEN UND SEINE ANWENDUNG IN EINER STROMQUELLE**

METHOD FOR DRAWING POWER FROM ELECTROCHEMICAL CELLS USING FREQUENCY PULSES, AND USE OF SAID METHOD IN A POWER SOURCE

DISPOSITIF PERMETTANT DE PRÉLEVER DU COURANT DANS DES CELLULES ÉLECTROCHIMIQUES AU MOYEN D'IMPULSIONS DE FRÉQUENCE ET SON UTILISATION DANS UNE SOURCE DE COURANT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **21.04.2008 DE 102008020004**

(43) Veröffentlichungstag der Anmeldung:
**02.02.2011 Patentblatt 2011/05**

(73) Patentinhaber: **Akwa Gmbh**
**60325 Frankfurt am Main (DE)**

(72) Erfinder: **SEROPJAN, Mikhail**
**Moskau**
**115142 (RU)**

(74) Vertreter: **Kleine, Hubertus et al**
**Am Zwinger 2**
**33602 Bielefeld (DE)**

(56) Entgegenhaltungen:
**DE-A1- 1 805 022      DE-A1- 10 251 685**
**US-A1- 2002 120 906**

• **HODGSON P ET AL: "Interfacing the aluminium-air battery with telecommunications equipment" 19901021; 19901021 - 19901025, 21. Oktober 1990 (1990-10-21), Seiten 351-358, XP010009821**

**Beschreibung**

Die Verwendung von elektrochemischen Zellen für die Produktion von Stromquellen ist allgemein bekannt. Insbesondere bei tragbaren Stromquellen finden oft Metall-Luft-Zellen Verwendung, bei denen eine Metallanode und eine Gasdiffusionskathode sowie eine Elektrolytlösung zum Einsatz kommen. Beispiele für Anodenmetalle sind Magnesium, Zink und Aluminium. Bei den Elektrolytlösungen handelt es sich vorwiegend um wässrige Alkalilösungen oder Natriumchlorid-Lösungen.

Für einen mobilen Einsatz solcher Stromquellen spielen das Gewicht und die Dimensionen der Stromquelle und ihrer Verbrauchsmaterialien eine wichtige Rolle. Da die benötigten Leistungsdaten der Stromquellen von der Anwendung vorgegeben werden, ist eine kompaktere Bauweise mit geringem Gewicht nur dadurch zu erzielen, dass die Effizienz der Stromquellen optimiert wird. Limitierende Faktoren in der Leistung von elektrochemischen Zellen sind u. a. die Bildung von Reaktionsprodukten, ungenügende Gasdiffusion und ungenügende Oberflächenaktivität. Daher sind bislang diverse Entwicklungen zur Verbesserung der tragbaren Stromquellen mittels konstruktiver Maßnahmen und Änderung der chemischen Zusammensetzung der Elektrodenmaterialien durchgeführt worden.

US 6,127,061 beschreibt die Verbesserung der Leistungsdichte von Metall-Luft-Zellen mittels einer besonderen Luft-Kathode, die eine katalytische Schicht enthält, die aus einer Mischung von Kohlenstoffpartikeln, hydrophoben Partikeln, einem Metallhydroxid und Partikelmaterial mit großer Oberfläche aufgebaut ist. Darauf ist eine elektrisch leitfähige Struktur aufgebracht, auf die wiederum eine luftdurch- und wasserundurchlässige Schicht folgt.

In US 5,004,654 wird eine Aluminium-Luft-Zelle dargelegt, deren Anodenmaterial mit Magnesium und/oder Calcium legiert ist und in deren Elektrolyt und/oder Anodenmaterial Zinn zugegen ist. US 5,360,680 beschreibt die bedienungsfreundliche Ausführung von Metall-Luft-Zellen als mechanisch wiederaufladbare Stromquellen, sowie verschiedene Anodenmaterialien, insbesondere aktiviertes Zink in aufgeschlämmter Form. Besonderes Augenmerk wird dabei auf einen Einsatz in Elektrofahrzeugen und die damit gewünschten Eigenschaften einer hohen Stromdichte, einer hohen Stromkapazität und einer hohen Maximalleistung gelegt.

EP 1 843 418 A1 beschreibt eine elektrochemische Spannungs-/Stromqelte, insbesondere eine Brennstoffzelle oder Batterie, bei der als Elektrolyt Meerwasser und/oder Alkalilösung einer für die Verwendung in einer elektrochemischen Metall-Luft-Zelle geeigneten Anode, und einer Gas-Diffusionskathode oder Luftkathode, die zumindest eine hydrophobe Schicht aufweist, verwendet wird. Hierbei weist das Gehäuse einen durch eine oder mehrere flüssigkeitsundurchlässige Wandungen begrenzten Gehäuseraum auf, wobei dem Gehäuseraum über zumindest eine Öffnung Luft oder Sauerstoff zuführbar ist. Zumindest eine der flüssigkeitsundurchlässigen Wandungen des Gehäuseraums wird durch die Kathode oder durch die hydrophobe Schicht der Kathode gebildet. Der Zwischenraum ist zumindest teilweise mit einem Elektrolyt, insbesondere Meerwasser, Salzwasser oder Alkalilösungen, befüllbar.

Der in Anspruch 1 offengelegten Erfindung liegt das Problem zugrunde, die elektrische Leistungscharakteristik und Kapazität einer Stromquelle bei vorgegebener Bauart der darin verwendeten elektrochemischen Stromquelle zu verbessern.

Dieses Problem wird durch ein Verfahren der Stromentnahme aus elektrochemischen Stromquellen gemäß Anspruch 1 gelöst. Anspruch 1 beschreibt ein Verfahren der Stromentnahme aus allen Arten von elektrochemischen Stromquellen, dadurch gekennzeichnet, dass die Stromentnahme durch den Verbraucher (7) über einen Stromwandler erfolgt, der einen Transformator (4) enthält, dessen Primärstromkreis eine elektrochemische Stromquelle (1), einen Nebenschlussschaltkreis (2) und ein Schaltelement mit Steuereinheit (3) und dessen Sekundärstromkreis einen induktiven Energiespeicher (5) und den Verbraucher (7) enthält, wobei die Stromentnahme durch Frequenzimpulse unter den Bedingungen erfolgt, dass das Verhältnis der Kapazität des Nebenschlussschaltkreises ($C_{Sh}$) zur Fläche (S) und spezifischen Differentialkapazität ($C_{D,s}$) der Anode von $C_{Sh} = 0{,}5 \cdot (C_{D,s} - S)$ bis $C_{Sh} = 5 \cdot (C_{D,s} \cdot S)$ beträgt, und dass die

minimale Frequenz $f_{min}$ der Frequenzimpulse gemäß der Formel $$f_{min} = \frac{1}{2\pi \cdot C_{D,s} \cdot 1{,}87\,\Omega \cdot cm^2}$$ ausgewählt wird. Dieses Verfahren dient als Grundlage zur Ermittlung der optimalen Parameter für die Bauteile der

Schaltung. Die Optimierung einer definierten Stromquelle erfolgt nach einem oder mehreren wichtigen Kennwerten für die Lösung konkreter Verbraucheraufgaben. Z. B. erfolgt die Optimierung eines DC-DC-Stromwandlers für eine Metall-Luft-Zelle nach dem Metallverbrauch der Anode unter der Bedingung, dass die Ausgangsleistung der Stromquelle die eingestellte nicht unterschreitet. Durch die Frequenzänderung der Impulse vom RC-Erzeuger in der Steuereinheit für den Hilfswiderstand (Widerstand mit stellbarem Widerstandswert) lassen sich versuchsspezifisch die Abhängigkeiten des Anodenverbrauchs (Gramm pro Wh) und der maximalen Ausgangsleistung von der Impulsfrequenz aufbauen. Bei beiden Kurven findet man eine Frequenz, bei der der Anodenmetallverbrauch minimal ist, vorausgesetzt, dass die maximale Ausgangsleistung der Stromquelle die eingestellte nicht unterschreitet. Weiterhin lassen sich bei der festgestellten Frequenz die konstruktiven Kenngrößen des Planartransformators, der Drossel usw. optimieren.

Anspruch 2 beschreibt eine Stromquelle zur Durchführung des Verfahrens nach Anspruch 1 enthaltend eine mit einer Elektrolytlösung gefüllte elektrochemische Zelle (1) und einen DC-DC-Stromwandler, dadurch gekennzeichnet, dass der DC-DC-Stromwandler einen Transformator (4) enthält, dessen Primärstromkreis aus der elektrochemischen Zelle (1), einem Nebenschlussschaltkreis (2) und einem Schaltelement mit Steuereinheit (3), sowie dessen Sekundärstromkreis aus einem induktiven Energiespeicher (5) und einem Speicherkondensator (6) besteht, wobei der Verbraucher (7) an den Sekundärstromkreis der Stromquelle angeschlossen wird und das Verhältnis der Kapazität des Nebenschlussschaftkreises ($C_{Sh}$) zur Fläche (S) und spezifischen Differentialkapazität ($C_{D,s}$) der Anode von $C_{Sh} = 0,5 \cdot (C_{D,s} \cdot S)$ bis $C_{Sh} = 5 \cdot (C_{D,s} \cdot S)$ beträgt.

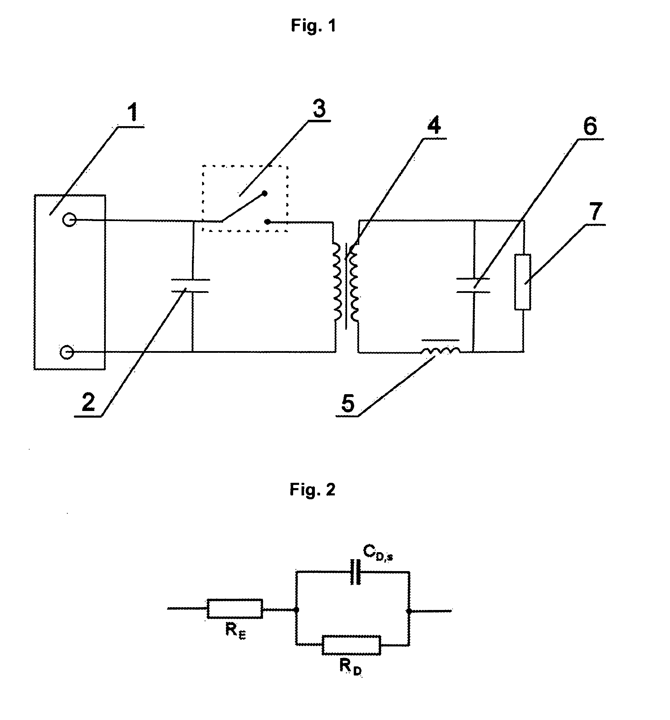

Durch den erfindungsgemäßen Aufbau der Stromquelle (Fig. 1), welche nach dem Verfahren gemäß Anspruch 1 arbeitet, wird bei allen Arten von elektrochemischen Stromquellen eine Verbesserung des Leistungsvermögens erreicht. Bei den meisten Arten wird zusätzlich auch die Kapazität der Stromquelle erhöht. Erreicht wird dies mittels der Optimierung des durch das Schaltelement mit Steuereinheit (3) von der elektrochemischen Stromquelle (1) auf den Transformator (4) erzeugten Frequenzimpulses auf die anschließende Energiespeicherung im Speicher (5) und deren Übergabe an den Verbraucher (7).

Somit lässt sich durch die Erfindung eine kompaktere und leichtere Stromquelle von gewünschter Leistung und Kapazität auf der Basis verschiedener elektrochemischer Zellen realisieren.

Besonders vorteilhafte Ausgestaltungen der Erfindungen sind in den nachfolgenden Ansprüchen dargelegt. In Anspruch 3 wird der optimierte Einsatz eines Schaltelements mit Steuereinheit dargelegt, das in der Lage ist, definierte Frequenzimpulse auf den Transformator abzugeben. Ein Ausführungsbeispiel dieser Baugruppe im DC-DC-Stromwandler soll nachfolgend beschrieben werden: Als Schaltelement kann eine Transistorgruppe eingesetzt werden. Die Steuereinheit selbst kann u. a. aus folgenden Komponenten bestehen: einem Kontroller (Mikroschaltung) mit erforderlichen Einstellungen, einer Anlasschaltung, einem Rückführsystem, welches die Impulszeiten und -abstände je nach der Lastleistung regelt, Mikroschaltungen für Verlustreduzierung und Pufferschaltungen für die Verkürzung der Umschaltzeiten der obigen Transistoren.

Anspruch 4 beschreibt die vorteilhafte Verwendung eines Planartransformators als Transformator im DC-DC-Stromwandler. Die Vorteile ergeben sich durch folgende besonderen Eigenschaften von Planartransformatoren:

- Die verbesserte gegenseitige Induktion im Planartransformator erhöht den Wirkungsgrad des DC-DC-Stromwandlers.
- Die Dimensionen des DC-DC-Stromwandlers sind beim Einsatz des Planartransformators wesentlich geringer.
- Die serienmäßige Produktion des Planartransformators für den DC-DC-Stromwandler ist einfacher und prozesssicherer als bei den herkömmlichen Typen.

Besonders vorteilhafte Parameter für die optimale Abstimmung der Bauelemente der Stromentnahmeschaltung auf die elektrochemische Stromquelle sind in den Bedingungen der Ansprüche 1 bzw. 2 offenbart.

Demnach beträgt die Kapazität des Nebenschlussschaltkreises $C_{Sh}$ von $C_{Sh} = 0,5 \cdot (C)$ bis $C_{Sh} = 5 \cdot (C)$, wobei C nach folgenden Formeln bestimmt wird, falls mehrere Anoden im System vorhanden sind:

$$\text{Parallelschaltung: } C = C_{D,S1} \cdot S_1 + C_{D,S2} \cdot S_2 + \ldots + C_{D,Sn} \cdot S_n$$

$$\text{Reihenschaltung: } \frac{1}{C} = \frac{1}{C_{D,S1} \cdot S_1} + \frac{1}{C_{D,S2} \cdot S_2} + \ldots + \frac{1}{C_{D,Sn} \cdot S_n}$$

(n - Anzahl der Elemente; $C_{D,Sn}$ - spezifische Differentialkapazität der Anode des Elements n; $S_n$ - Fläche der Anode des Elements n).

In den Ansprüchen 1 und 2 wird zur Vereinfachung die Formelschreibweise für eine einzelne Zelle benutzt (C = $C_{D,S} \cdot S$), es versteht sich jedoch, dass mittels des Klammerausdrucks die Differentialkapazität der Anoden berechnet wird und dieser für den Fall, dass die elektrochemische Stromquelle aus mehreren parallel oder in Reihe verbundenen Zellen besteht, durch die obigen allgemein bekannten Regeln der Summierung von Kapazitäten für Parallel- und Reihenschaltung der Elemente entsprechend zu vervollständigen ist.

Insbesondere für den gebräuchlichsten Fall, dass die elektrochemische Stromquelle aus N mit einander in Reihe verbundenen identischen Zellen besteht, befindet sich die Kapazität eines Nebenschlussschaltkreises $C_{Sh}$ gemäß Anspruch 6 im Bereich von $C_{Sh}$ = 0,5 . ($C_{D,S}$ · S / N) bis $C_{Sh}$ = 5 . ($C_{D,S}$ · S / N).

Eine für tragbare Stromquellen besonders geeignete Ausführung der elektrochemischen Stromquelle ist die in Anspruch 5 dargestellte Metall-Luft-Zelle, die es ermöglicht, den Elektrolyt getrennt von der Batterie zu lagern und zum Einsatzort zu bringen.

Eine weitere vorteilhafte Ausgestaltung der Erfindung ist der in Anspruch 6 beschriebene Einsatz von Magnesium als Anodenmaterial, das bei guten Leistungsdaten der elektrochemischen Zelle ein geringes Gewicht ermöglicht.

Die in Anspruch 7 ausgeführte Zellenart mit Natriumchlorid als Elektrolyt hat den entscheidenden Vorteil, dass der Endanwender nur mit einem ungefährlichen Verbrauchsgut umgehen muss und nicht mit alkalischen Lösungen, die besondere Vorsichtsmaßnahmen erfordern. Zudem ist die Entsorgung der Abfallprodukte hier ökologisch sauberer.

Ein Ausführungsbeispiel der Erfindung ist in Fig. 1 dargestellt, dessen Funktionsweise im Folgenden näher erläutert werden soll. Das gewünschte technische Ergebnis der verbesserten elektrischen Charakteristika der Stromquelle wird durch die Verwendung einer elektrochemischen Stromquelle (1) erreicht, die über ein Schaltelement mit Steuereinheit (3) mit einem planaren Transformator (4) verbunden ist. An die elektrochemische Stromquelle ist zudem ein Nebenschlussstromkreis (Shunt) (2) mit einem Kondensator der Kapazität $C_{Sh}$ angeschlossen. Die sekundäre Wicklung des planaren Transformators (4) ist mit einem induktiven Energiespeicher (5), einem Speicherkondensator (6) und dem Lastwiderstand (Verbraucher) (7) verschaltet.

Die Stromquelle funktioniert auf folgende Weise: Beim Schließen des Kontaktes durch die Steuereinheit (3) fließt der Strom, der sich aus der Summe des Stromes der elektrochemischen Stromquelle (1) und des Stromes des Nebenschlussschaltkreises (2) der Kapazität $C_{Sh}$ zusammensetzt. Die Energie sammelt sich in der Drossel (5) und fließt durch den Speicherkondensator (6) zum Verbraucher (7). Die Zeit des abgeschalteten Zustandes wird durch die minimale Zeit der Übertragung der Energie, die im induktiven Speicher (5) gespeichert wurde, an den Verbraucher (7) bestimmt. Der maximale Wirkungsgrad der Übertragung der elektrischen Energie wird mittels der Senkung des Eingangswiderstands des Stromwandlers unter 1 m$\Omega$ erreicht.

Als elektrochemische Stromquelle dient eine Metall-Luft-Zelle mit einer Magnesiumanode, einer Gasdiffusionskathode und einem Elektrolyt aus wässriger Natriumchloridlösung. Der Quelleninnenwiderstand R der elektrochemischen Stromquelle setzt sich aus der Summe der Widerstände der Anode, der Kathode und des Elektrolyt zusammen ($R = R_A + R_K + R_E$), wobei man den Widerstand der Anode vereinfacht als Schaltkreis gemäß Fig. 2 ($R_E$ = Elektrolytwiderstand, $R_D$ = spezifischer Widerstand der Doppelschicht, $C_{D,s}$ = spezifische Differentialkapazität der Doppelschicht) darstellen kann.

Nachfolgend soll die Anodenkomponente des summarischen Innenwiderstands der elektrochemischen Stromquelle in zwei Funktionsarten untersucht werden: dem Gleichstromregime und dem Frequenzregime der Energieentnahme.

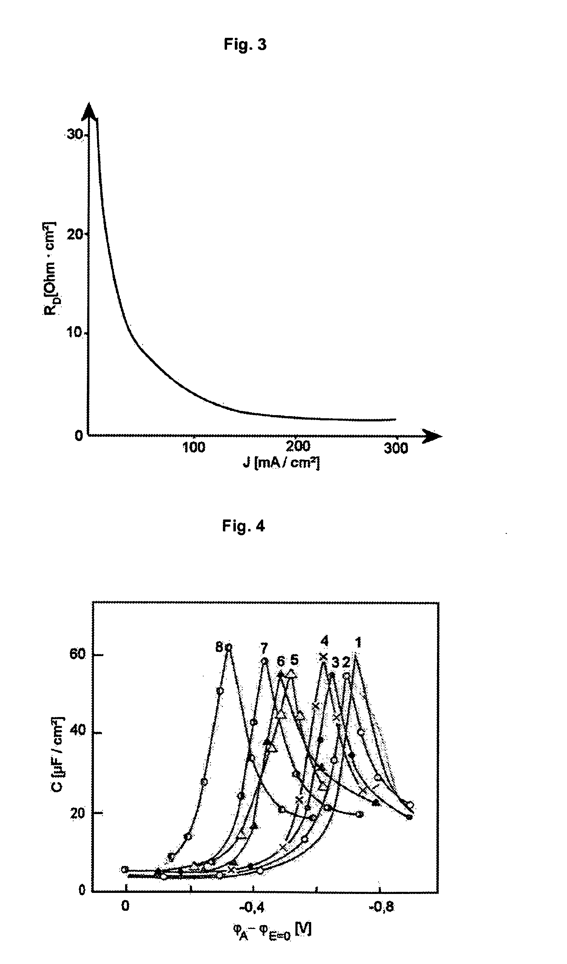

Im Gleichstromregime der elektrochemischen Zelle bestimmt der Ladungswiderstand der Doppelschicht $R_D$ den Widerstand $R_A$. Die Komponente $R_D$ fällt mit steigender Stromdichte wegen der Erhöhung der Konzentration an Reaktionselementen in der elektrischen Doppelschicht und der Veränderung der Aktivierungsenergie, welche durch den Potentialsprung im dichten Teil der Doppelschicht verursacht wird. In Fig. 3 ist die Abhängigkeit des spezifischen Widerstands $R_D$ von der Stromdichte dargestellt.

Im Frequenzregime der Energieentnahme wird der Anodenwiderstand $R_A$ durch die Impedanz bestimmt:

$$R = \frac{1}{2\pi \cdot C \cdot f}$$

C = Differentialkapazität, f = Frequenz.

Die Kapazität der Doppelschicht hängt hierbei vom Potential der Anode ab.

In Fig. 4 sind typische Kurven der Differentialkapazitäten von 0,1 M Lösungen von verschiedenen Metallen (1 = Hg, 2 = Bi, 3 = Pb, 4 = Sn, 5 = Cd, 6 = In, 7 = In + Ga, 8 = Ga) in $C_5H_{11}OH$ im Bezug zu 0,1 N Lösungen der oberflächlich inaktiven Elektrolyten dargestellt.

Im Bereich des negativen Potentials der oberflächlich inaktiven Elektrolyten beträgt die Differentialkapazität der Doppelschicht für alle Metalle etwa einen Wert von 17 $\mu$F/cm$^2$. Man kann also bei einem bestimmten Frequenzregime der Energieentnahme die Impedanz der Anode so herabsetzen, dass der Innenwiderstand der elektrochemischen Stromquelle sich ungefähr dem Elektrolytwiderstand angleicht. Bei einer Frequenz von beispielsweise 100 kHz erreicht die spezifische Impedanz der Anode 0,09 $\Omega$ · cm$^2$. Der spezifische Widerstand des Elektrolyts bei einem Elektrodenabstand von 0,5 cm und einer Arbeitstemperatur von 60-70 °C beträgt ca. 2,5 - 3 $\Omega$ · cm$^2$. Der spezifische Widerstand von modernen Gasdiffusionskathoden beträgt bei gleicher Temperatur etwa 0,8 - 1,0 $\Omega$ · cm$^2$. Damit ergibt sich für den summarischen Innenwiderstand der elektrochemischen Zelle im Frequenzregime von 100 kHz (im Falle der maximalen Werte für $R_E$ und $R_K$) ein Wert von etwa 4,1 $\Omega \cdot$ cm$^2$, wobei $R_A$ ungefähr 2,5% des summarischen Innenwiderstandes bilden wird.

Im Gleichstromregime der elektrochemischen Stromquelle beträgt die Komponente $R_A$ bei Stromdichten von 50 - 100 mA / cm$^2$, die in der Praxis realisierbar sind, ungefähr 6 $\Omega \cdot$ cm$^2$ (siehe Fig. 3). Entsprechend erreicht der summarische spezifische Innenwiderstand etwa 10 $\Omega \cdot$ cm$^2$, was in etwa 2,5-fach höher ist als beim Frequenzregime. $R_A$ wird dabei ca. 60% vom Gesamtwiderstand ausmachen.

Die Erhöhung der Leistung im Vergleich zum Gleichstromregime der Energieentnahme wird durch den minimalen Wert der Intervalle zwischen den Impulsen bestimmt, der durch die Zeit der Übergabe der im Speicherelement gespeicherten Energie an den Verbraucher beschränkt ist. Der Nebenschlussschaltkreis mit einer Kapazität von $C_{Sh} = 0,5 \cdot (C_{D,s} \cdot S)$ bis $C_{Sh} = 5 \cdot (C_{D,s} \cdot S)$ (mit S = Fläche der Anode und $C_{D,s}$ = spezifische Differentialkapazität der Anode) wird derart ausgewählt, dass bei der Abschaltung der elektrochemischen Stromquelle vom Stromwandler das Potential der Anode nicht mehr in das negative Potential abfällt, da die spezifische Kapazität bei weniger negativen Potentialwerten höher ist, insbesondere bei der Adsorption von organischen Stoffen (vgl. Fig. 4).

Die Bestimmung der optimalen Frequenzen für den praktischen Anwendungsfall erfolgt ausgehend von der oben genannten Formel für die Berechnung der Impedanz der Doppelschicht, die den Anodenwiderstand $R_A$ der bei der Elektroenergieentnahme mittels Frequenzimpulsen bestimmt:

$$R_A = \frac{1}{2\pi \cdot C \cdot f}$$

mit: C = Differentialkapazität der Doppelschicht der Anode, f = Frequenz der Impulse

Wie oben ausgeführt, hängt die Kapazität der Doppelschicht vom Potential der Anode ab. Der Wertebereich, den die Kapazität C für verschiedene Arten von Metallen annehmen kann, ist in Fig. 4 dargestellt. Bei den meisten elektrochemischen Elementen befindet sich das Anodenpotential im Verhältnis zum Nullniveau der Vergleichselektrode im negativen Bereich und läuft nach dem Ausschalten des Schaltelements (3) noch mehr in den negativen Bereich, d.h. $C_{D,S}$ nähert sich dem bekannten Wert von 17 $\mu$F/cm$^2$ an.

Um das Anodenpotential auf einem höheren Niveau zu halten und damit die Reduzierung von $R_A$ aufrecht zu erhalten, wird die zusätzliche Kapazität $C_{Sh}$ (2) benutzt, durch die Strom in den Pausen zwischen den Impulsen fließt, falls der Hauptschaltkreis ausgeschaltet ist. Somit ergibt sich, dass die Mindestimpulsfrequenz für die Durchführung des Verfahrens nach Anspruch 1 der vorliegenden Anmeldung durch das folgende Verhältnis bestimmt wird:

$$R_A = \frac{10^6}{2\pi \cdot 17 \cdot f_{min}} = 1,87 \quad \Omega \cdot cm^2$$

wonach sich ergibt: $f_{min}$ = 5 kHz

Wie aus obiger Formel leicht ersichtlich ist, bewirkt eine Erhöhung der Frequenz f eine Erniedrigung der Anodenimpedanz $R_A$ und damit des Gesamtwiderstandes R der Stromquelle.

Werden in der eingesetzten elektrochemischen Zelle andere Anodenmaterialien verwendet als die in Fig. 4 abgebildeten, die einen anderen Wertebereich der Differentialkapazität $C_{D,S}$ aufweisen, so wird die Mindestimpulsfrequenz für die Durchführung des Verfahrens nach Anspruch 1 der vorliegenden Anmeldung analog bei einem entsprechenden minimalen Wert von $C_{D,S}$ der Anode bestimmt. Dementsprechend erfolgt auch die Definition der Entnahmeeigenschaften in Anspruch 1 nicht über feste Frequenzen, sondern über die Impedanz der Anoden.

Bei einer Impulsfrequenz von f = 100 kHz wird der Widerstand der Anode $R_A$ erheblich geringer als der Widerstand moderner Kathoden (siehe oben) und damit eine weitere Erhöhung der Impulsfrequenz im Hinblick auf eine weitere Reduzierung des Widerstandanteils $R_A$ im Gesamtwiderstand einer elektrochemische Stromquelle uninteressant. Daher liegen die sinnvoll möglichen Frequenzen für die Umsetzung des Verfahrens gemäß Anspruch 1 unter den genannten Bedingungen im Bereich von 5 bis 100 kHz.

Die Auswahl der optimalen Frequenz innerhalb des angegebenen möglichen Bereichs wird dadurch erreicht, dass ein Gleichgewicht zwischen den folgenden physikalischen Prozessen zwecks einer maximalen Effizienz des gesamten Systems unter der Bedingung gefunden wird, dass der Wert der maximalen Leistung der Stromquelle für den Verbraucher nicht unter einem vorgegebenen Wert liegt:

1) Erhöhung der zu entnehmenden Energie mittels Erhöhung der Frequenz und Reduzierung des Stromimpulspausenverhältnisses (Verhältnis der Impulspause zur Impulszeit).

2) Der Anstieg der von der elektrochemischen Stromquelle zu entnehmenden Leistung ist abhängig von der Erhöhung der Frequenz und Amplitude sowie Reduzierung des Stromimpulspausenverhältnisses.

3) Reduzierung des Widerstandes der elektrochemischen Stromquelle bei einer Erhöhung der Stromimpulsfrequenz.

4) Die Erhöhung von Verlusten (induktive, ohmsche etc.) im DC-DC Wandler ist abhängig von der Veränderung der Frequenz, der Amplitude sowie des Pausenverhältnisses der Stromimpulse.

Eine Erweiterung der Frequenzbandbreite bis 1 MHz erscheint nach dem heutigen Stand der Technik in der Praxis nur dann gerechtfertigt, falls in der Zukunft eine Verringerung des Kathoden- und des Elektrolytwiderstandes allgemein technisch möglich wird, sowie im Falle einer weiteren Entwicklung der Elektronik und der Schaffung eines neuen Hochfrequenzwandlers für ein noch höheres Maß an Effizienz und maximaler Leistung des gesamten Systems.

Folglich beträgt der durch Anspruch 1 definierte Frequenzbereich für die meisten elektrochemischen Stromquellen prinzipiell von 5 kHz bis ins Unendliche. Die Berechnung dieses Frequenzbereichs für jede elektrochemische Stromquelle erfolgt nach der oben genannten Formel für $R_A$ bei der Justierung des Doppelschichtwiderstandes $R_A$ gemäß Anspruch 1. Die Auswahlmöglichkeiten bezüglich einer konkreten Frequenz werden sich mit dem Stand der Elektronik im Bereich der Stromentnahme mittels Frequenzimpulsen vergrößern. Die maximal mögliche Frequenz der Impulse wird steigen, wobei das Impulspausenverhältnis minimal sein soll, jedoch nicht geringer als die für den Wiederaufbau (Regenerierung) der Doppelschicht nach dem jeweiligen Impuls erforderliche Zeit, die nach heutigen Berechnungen mit ca. $10^{-7}$ Sekunden angegeben wird. Dabei muss die Verlusterhöhung in der Systemelektronik bei der Umsetzung dieses Verfahrens zur Energieentnahme und Weiterleitung an den Verbraucher geringer als die durch die höheren Frequenzen und Reduzierung des Stromimpulspausenverhältnisses gewonnene Energie bleiben.

Als praktisches Beispiel der weiter oben beschriebenen Ausführung wurde eine einzellige Metall-Luft-Zelle verwendet, deren Magnesiumanode eine Fläche von 280 $cm^2$ und deren Gasdiffusionskathode eine Fläche von 240 $cm^2$ aufwies. Der Elektrodenabstand betrug 0,5 cm. Als Elektrolyt diente eine wässrige Natriumchloridlösung. Im nicht geschlossenen Stromkreis hatte die Zelle eine Spannung von 1,74 V. Es wurde ein Wandler gefertigt, bestehend aus einem Nebenschlussschaltkreis der Kapazität $C_{Sh}$ = 10.500 μF, einem Schaltelement mit Steuereinheit und einem Planartransformator mit einem Speicherelement und dem Speicherkondensator im Sekundärstromkreis. Die Stromquelle mit obiger Metall-Luft-Zelle und dem Wandler gewährleistete eine Abgabespannung von 12 V. Der Eingangswiderstand des Stromwandlers betrug 1 mΩ.

Im Gleichstromregime gab die Zelle eine maximale Leistung von 42 W bei einer Spannung von 0,84 V und einer Arbeitstemperatur von 50 °C ab. Die Stromdichte betrug 197 mA/$cm^2$. Nach 40 min Arbeit fiel die Spannung an der Zelle bis auf 0,75 V ab, wonach die Stromabgabe aufhörte, da der Elektrodenzwischenraum von Reaktionsprodukten angefüllt worden war. Im Gleichstromregime der Zelle betrug der Innenwiderstand 18 mΩ und die Stromstärke 50 A.

Nach der Arbeit im Gleichstromregime wurde der Stromwandler an die Zelle angeschlossen. Am Ausgang des Stromwandlers wurden eine Abgabespannung von 12,05 V, eine Laststromstärke von 3,5 A und eine Leistung von 41,2 W festgestellt. Vor dem Experiment wurde der Stromwandler überprüft. Bei einer Eingangsspannung von 0,9 V und einer Leistung von 45-60 W betrug der Wirkungsgrad 0,8. Der Verlust im Stromwandler betrug 11,5 W. Die Verluste in den Anschlussleitungen betrugen 1,5 W. Somit ergibt sich für die Leistung am Eingang des Stromwandlers ungefähr 54,2 W. Die Stromstärke der Zelle betrug in diesem Fall 58 A, die effektive Spannung 0,93 V. Die Summe der Innenwiderstände der elektrochemischen Zelle berechnete sich zu 13 mΩ. Nach Einschätzung im Gleichstromregime betrug die Summe der Innenwiderstände 18 mΩ. Somit hat sich der Widerstand um 5 mΩ verringert.

Weiterhin wurde der Stromwandler auf eine Frequenz von 77 kHz eingestellt. Der Innenwiderstand der elektrochemischen Zelle verringerte sich dadurch nur unwesentlich (von 13 mΩ auf 12,5 mΩ), aber der Metallverbrauch fiel dabei um fast 10%. Bei der Arbeit im 27 kHz Regime betrug der Verbrauch 1,62 Ah/g, während er im 77 kHz Regime 1,78 Ah/g betrug. Die Spannung an der elektrochemischen Zelle fiel während der Arbeit im Frequenzregime der Energieentnahme nicht ab und der Elektrodenzwischenraum wurde nicht mit Reaktionsprodukten angefüllt.

Vergleichsanalyse

Die mit obiger Technik erzielten Vorteile lassen sich anhand eines Vergleiches des Prototypen "AKWA® MW 12/40", der unter Anwendung des erfindungsgemäßen Verfahrens von der AKWA GmbH, Frankfurt am Main entwickelt wurde, mit den von der Firma MVIT, Moskau, Russische Föderation produzierten, kommerziell verfügbaren Produkten "MVIT 4-800 ПС" bzw. "MVIT 2-400 ПС" aufzeigen.

Zum heutigen Zeitpunkt wird durch die Firma AKWA GmbH eine serienmäßige Herstellung von autonomen, ökologisch sauberen, kompakten und mit Salzwasser funktionierenden Stromquellen "AKWA® MW 12/40" und "AKWA® MW 12/25" unter Anwendung der Erfindung vorbereitet.

a) Maximales Leistungsvermögen, Abmessungen und Gewicht

Ein Vergleich des maximalen Leistungsvermögens zeigt, dass der Prototyp "AKWA® MW 12/40" in der Leistung der Stromquelle "MVIT 4-800 ΠC" entspricht. Die Abmessungen der MVIT übersteigen die Abmessungen der AKWA® dabei um mehr als das Vierfache. Ein Gewichtsvergleich ergibt einen ähnlichen Vorteil für die AKWA®. Das Trockengewicht (Lagerung und Transport) der MVIT ist mehr als das Fünffache, das Einsatzgewicht immer noch mehr als das Vierfache dessen der AKWA®.

b) Kapazität der Ersatzcartridge

Ein Vergleich der Ersatzcartridgekapazitäten zeigt, dass die Kapazität der "AKWA® MW 12/40" mit 480 Wh die Kapazität der "MVIT 2-400 ΠC" mit 400 Wh um 80 Wh übersteigt. Dabei besteht die Ersatzcartridge der AKWA® lediglich aus zwei Anoden bei einem Gesamtgewicht von 0,338 kg, während die Cartridge der MVIT aus vier Anoden mit einem Gesamtgewicht von 0,480 kg besteht. Dies bedeutet, dass die Effizienz der Metallausnutzung mindestens um den Faktor 1,7 größer ist.

Eine Ersatzcartridge der AKWA® erlaubt u. a. folgende Einsatzzwecke:

- Stromversorgung einer Glühbirne (12 V, 12 W) für bis zu 40 Stunden
- Stromversorgung eines Fernsehgeräts (12 V) für bis zu 25 Stunden
- Stromversorgung eines Reisekühlschranks (35 W) bis zu drei Tagen
- bis zu sieben Aufladungen eines Notebookakkus (4800 mAh)
- bis zu 25 Aufladungen von Mobiltelefonen, Digitalkameras, Funkgeräten, GPS-Empfängern, Radiogeräten oder tragbaren CD/DVD-Playern
- eine Aufladung einer KFZ-Batterie (55 Ah)

Die folgende Tabelle stellt die Daten der verschiedenen Stromquellen gegenüber.

|  | MVIT 4-800 ΠC | AKWA® MW 12/40 | MVIT 2-400 ΠC |
|---|---|---|---|
| Nominalspannung, [V] | 12 | 12 | 12 |
| Max. Leistungsvermögen, [W] | 40 | 40 | 21 |
| Nominalkapazität pro Cartridge, [Wh] | 800 | 480 | 400 |
| Min. Umgebungstemperatur, [°C] | -20 | -25 | -20 |
| Trockengewicht, [kg] | 5,4 | 1 | 3 |
| Einsatzgewicht, [kg] | max. 11,4 | max. 2,6 | max. 6 |
| Gewicht einer Ersatzcartridge, [kg] | 0,96 | 0,338 | 0,48 |
| Abmessungen (L/B/H), [mm] | 250/420/220 | 190/100/225 | 250/230/220 |
| Salzwaserkonzentration, [g/l] | 100-150 | | |
| Haltbarkeit im Trockenzustand | mind. 10 Jahre | | |
| Garantierte Lebensdauer | mind. 3.000 Stunden | | |

**Bezugszeichenliste**

1 Elektrochemische Stromquelle
2 kapazitiver Nebenschlussschaltkreis (Shunt)
3 Schaltelement mit Steuereinheit
4 planarer Transformator
5 induktiver Energiespeicher

6 Speicherkondensator
7 Lastwiderstand (Verbraucher)

**Patentansprüche**

1. Verfahren der Stromentnahme aus allen Arten von elektrochemischen Stromquellen, wobei die Stromentnahme durch den Verbraucher (7) über einen Stromwandler erfolgt, der einen Transformator (4) enthält, dessen Primärstromkreis eine elektrochemische Stromquelle (1), einen Nebenschlussschaltkreis (2) und ein Schaltelement mit Steuereinheit (3) und dessen Sekundärstromkreis einen induktiven Energiespeicher (5) und den Verbraucher (7) enthält, **dadurch gekennzeichnet, dass** die Stromentnahme durch Frequenzimpulse unter den Bedingungen erfolgt, dass das Verhältnis der Kapazität des Nebenschlussschaltkreises ($C_{Sh}$) zur Fläche (S) und spezifischen Differentialkapazität ($C_{D,s}$) der Anode von $C_{Sh} = 0{,}5 \cdot (C_{D,s} \cdot S)$ bis $C_{Sh} = 5 - (C_{D,s} \cdot S)$ beträgt, und dass die minimale Frequenz $f_{min}$ der Frequenzimpulse gemäß der Formel $f_{min} = \dfrac{1}{2\pi \cdot C_{D,s} \cdot 1{,}87\,\Omega \cdot cm^2}$ ausgewählt wird.

2. Stromquelle zur Durchführung des Verfahrens nach Anspruch 1 enthaltend eine mit einer Elektrolytlösung gefüllte elektrochemische Stromquelle (1) und einen DC-DC-Stromwandler, **dadurch gekennzeichnet, dass** der DC-DC-Stromwandler einen Transformator (4) enthält, dessen Primärstromkreis aus

   a. der elektrochemischen Stromquelle (1),
   b. einem Nebenschlussschaltkreis (2) und
   c. einem Schaltelement mit Steuereinheit (3),
   sowie dessen Sekundärstromkreis aus
   d. einem induktiven Energiespeicher (5) und
   e. einem Speicherkondensator (6)
   besteht, wobei der Verbraucher (7) an den Sekundärstromkreis der Stromquelle angeschlossen wird und das Verhältnis der Kapazität des Nebenschlussschaltkreises ($C_{Sh}$) zur Fläche (S) und spezifischen Differentialkapazität ($C_{D,s}$) der Anode von $C_{Sh} = 0{,}5 \cdot (C_{D,s} \cdot S)$ bis $C_{Sh} = 5 - (C_{D,s} \cdot S)$ beträgt.

3. Stromquelle nach Anspruch 2, **dadurch gekennzeichnet, dass** das Schaltelement mit Steuereinheit (3) durch den Transformator (4) auf die Energiespeicherung im induktiven Energiespeicher (5) hin optimierte Frequenzimpulse abgibt.

4. Stromquelle nach den Ansprüchen 2 oder 3, **dadurch gekennzeichnet, dass** der DC-DC-Stromwandler einen planaren Transformator (4) aufweist.

5. Stromquelle nach den Ansprüchen 2 bis 4, **dadurch gekennzeichnet, dass** die elektrochemische Stromquelle (1) eine metallische Anode und eine Gasdiffusionskathode aufweist.

6. Stromquelle nach den Ansprüchen 2 bis 5, **dadurch gekennzeichnet, dass** die Anode aus Magnesium besteht.

7. Stromquelle nach den Ansprüchen 2 bis 6, **dadurch gekennzeichnet, dass** es sich bei der Elektrolytlösung eine wässrige Natriumchloridlösung handelt.

**Claims**

1. A method for drawing current from all kinds of electrochemical current sources, with the drawing of current occurring by the consumer (7) via a current transformer which contains a transformer (4), the primary circuit of which contains an electrochemical current source (1), a shunt circuit (2) and a switching element with a control unit (3), and the secondary circuit of which contains an inductive energy storage unit (5) and the consumer (7), **characterized in that** the withdrawal of current occurs by frequency pulses under the conditions that the ratio of the capacitance of the shunt circuit ($C_{Sh}$) to the surface (S) and the specific differential capacitance ($C_{D,s}$) of the anode is $C_{Sh} = 0.5 \cdot (C_{D,s} \cdot S)$ to $C_{Sh} = 5 \cdot (C_{D,S} \cdot S)$, and that the minimum frequency $f_{min}$ of the frequency pulses is chosen according to the formula $f_{min} = \dfrac{1}{2\pi \cdot C_{D,s} \cdot 1.87\,\Omega \cdot cm^2}$ .

**2.** A current source for performing the method according to claim 1, containing an electrochemical current source (1) filled with an electrolytic solution and a DC-DC current transformer, **characterized in that** the DC-DC current transformer contains a transformer (4), the primary circuit of which consists of

    a) the electrochemical current source (1);
    b) a shunt circuit (2), and
    c) a switching element with a control unit (3);
    and its secondary circuit of
    d) an inductive energy storage unit (5) and
    e) a storage capacitor;
    with the consumer (7) being connected to the secondary circuit of the current source and the ratio of the capacitance of the shunt circuit ($C_{Sh}$) to the surface (S) and the specific differential capacitance ($C_{D,S}$) of the anode is $C_{Sh} = 0.5 \cdot (C_{D,S} \cdot S)$ to $C_{Sh} = 5 \cdot (C_{D,S} \cdot S)$.

**3.** A current source according to claim 2, **characterized in that** the switching element with the control unit (3) emits frequency pulses by the transformer (4), which pulses are optimized towards energy storage in the inductive energy storage unit (5).

**4.** A current source according to claim 2 or 3, **characterized in that** the DC-DC current transformer comprises a planar transformer (4).

**5.** A current source according to claims 2 to 4, **characterized in that** the electrochemical current source (1) comprises a metallic anode and a gas diffusion cathode.

**6.** A current source according to the claims 2 to 5, **characterized in that** the anode consists of magnesium.

**7.** A current source according to claims 2 to 6, **characterized in that** the electrolytic solution concerns a hydrous sodium chloride solution.

**Revendications**

**1.** Procédé pour prélever du courant à partir de tous types de sources d'électricité électrochimiques, dans lequel le prélèvement de courant est réalisé par le consommateur (7) par l'intermédiaire d'un convertisseur de courant contenant un transformateur (4) dont le circuit primaire contient une source d'électricité électrochimique (1), un circuit de dérivation (2) et un élément de commutation avec une unité de commande (3) et dont le circuit secondaire contient un accumulateur d'énergie à induction (5) et le consommateur (7), **caractérisé en ce que** le prélèvement de courant est réalisé par des impulsions de fréquence sous les conditions que le rapport de la capacité du circuit de dérivation ($C_{Sh}$) à la surface (S) et à la capacité différentielle spécifique ($C_{D,s}$) de l'anode soit de $C_{Sh} = 0,5 \cdot (C_{D,s} \cdot S)$ à $C_{Sh} = 5 \cdot (C_{D,s} \cdot S)$, et **en ce que** la fréquence minimale des impulsions de fréquence est choisie selon la

formule $f_{min} = \dfrac{1}{2\pi \cdot C_{D,s} \cdot 1,87\,\Omega \cdot cm^2}$ .

**2.** Source d'électricité pour la mise en oeuvre du procédé selon la revendication 1, contenant une source d'électricité électrochimique (1) remplie d'une solution d'électrolyte et un convertisseur de courant continu-continu, **caractérisée en ce que** le convertisseur de courant continu-continu contient un transformateur (4) dont le circuit primaire est formé par :

    a. la source d'électricité électrochimique (1),
    b. un circuit de dérivation (2) et
    c. un élément de commutation avec une unité de commande (3),
    et le circuit secondaire par :

d. un accumulateur d'énergie à induction (5) et

e. un condensateur d'accumulation (6),

le consommateur (7) étant raccordé au circuit secondaire de la source de courant et le rapport de capacité du circuit de dérivation ($C_{Sh}$) à la surface (S) et à la capacité différentielle spécifique ($C_{D,s}$) de l'anode étant de $C_{Sh} = 0,5 \cdot (C_{D,s} \cdot S)$ à $C_{Sh} = 5 \cdot (C_{D,s} \cdot S)$.

3. Source d'électricité selon la revendication 2, **caractérisée en ce que** l'élément de commutation à unité de commande (3) délivre par l'intermédiaire du transformateur (4) des impulsions de fréquence optimisées en vue de l'accumulation d'énergie dans l'accumulateur d'énergie à induction (5).

4. Source d'électricité selon la revendication 2 ou 3, **caractérisée en ce que** le convertisseur de courant continu-continu est un transformateur planaire (4).

5. Source d'électricité selon les revendications 2 à 4, **caractérisée en ce que** la source d'électricité électrochimique (1) possède une anode métallique et une cathode à diffusion de gaz.

6. Source d'électricité selon les revendications 2 à 5, **caractérisée en ce que** l'anode se compose de magnésium.

7. Source d'électricité selon les revendications 2 à 6, **caractérisée en ce que** la solution d'électrolyte est une solution aqueuse de chlorure de sodium.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6127061 A
- US 5004654 A
- US 5360680 A
- EP 1843418 A1